# EUROPEAN PATENT APPLICATION

(11) **EP 1 416 475 A2**
(43) Date of publication of application: **06.05.2004**
(21) Application number: 03256705.9
(22) Date of filing: 23.10.2003
(51) Int. Cl.: G11B 5/48, G11B 21/18

(54) **Bearing device**

(30) Priority: 29.10.2002 JP 2002313644
(71) Applicant: MINEBEA CO., LTD., Kitasaku-gun, Nagano-ken (JP)
(72) Inventor: KOYAMA, Toshisada, c/o Minebea Co., Ltd.,, Nagano-Ken, 389-0293 (JP); Mohri, Yasuhiro, c/o Minebea Co., Ltd.,, Nagano-Ken, 389-0293 (JP)
(74) Representative: Wilson Gunn Gee

(57) **Abstract**

A bearing device suitable for use in PC card type ultra-thin hard disk drive devices is provided. The bearing device includes two bearings assembled on a shaft. Each bearing includes an inner ring, an outer ring and rolling members such as balls. The outer rings of the bearings are in close contact with each other. A space greater than 2δ - the sum of axial one-sided rattle δ of each of the two bearings is created between the two inner rings by virtue of a difference between the total width dimensions of the two outer rings and the total width dimensions of the two inner rings. Therefore, the amount of preload applied to the outer edge of either inner ring can be adjusted over a wide range and the rattling of the bearing device can be eliminated, and at the same time the desired precision and rigidity of the bearing device can be maintained. The ends of the bearings with the inner ring and the outer ring aligned are apart from each other when the bearings are assembled. The distance (span) P between the rolling elements of the two bearings in the bearing device of present invention is same as the conventional bearing device. Since the dimension of the bearing device overall in the width orientation (axial orientation) is smaller, the thickness of the swing arm support can be reduced and made thinner than a swing arm that uses a conventional bearing device.

## Description

The present invention relates to a bearing device, more specifically to a bearing device suitable for use in head stack assemblies in a hard disk drive (HDD) where a swing arm is moved in a swinging motion.

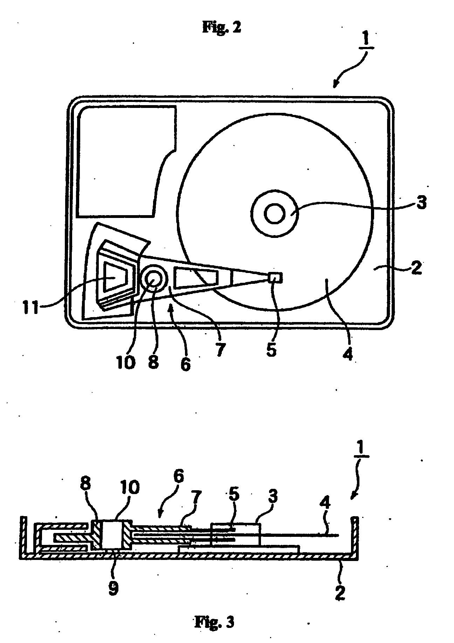

The devices shown in Figure 2 and Figure 3 show a hard disk drive composed of a rectangular box-like container (base plate) 2, a spindle motor 3 disposed on the base plate 2, and a head stack assembly (HSA) 6 having magnetic heads 5. The magnetic heads 5 read and write information in specified locations on a magnetic disk 4. The magnetic disk 4 is rotated by the spindle motor 3.

A tubular part 8 is attached to the HSA 6. A swing arm 7, having the magnetic heads 5 mounted at the tip of the swing arm 7, is attached on the tubular part 8. The HSA 6 is fitted with a shaft 9. The shaft 9 is attached to the base plate 2. The HSA 6 also includes a bearing device 10, which supports the swing arm 7 so it can swing on the shaft 9. A drive part (voice coil) for driving the swing of the swing arm 7 is also included in the HSA 6.

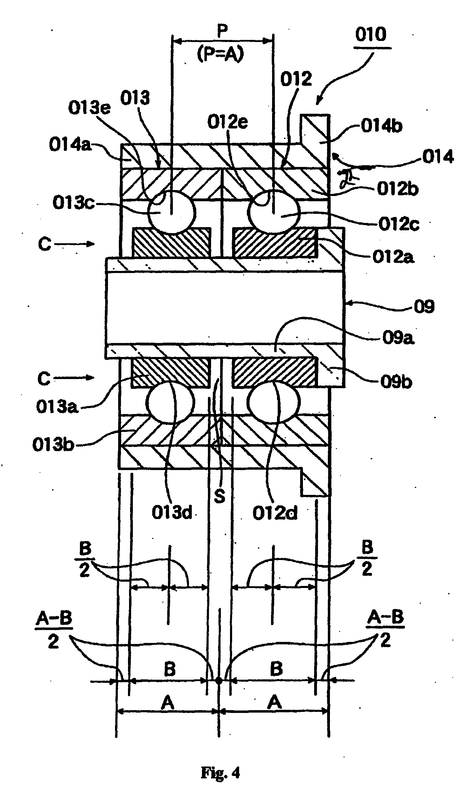

Figure 4 shows a conventionally used bearing device 010. The bearing device 010 comprises a first and second single row deep groove ball bearings (hereinafter, "ball bearings") 012 and 013 respectively, installed on the shaft 09. The shaft 09 is composed of a rectangular (**correct?**) shaft body 09a and a flange 09b formed at one end of the shaft body 09a. The flange 09b may be attached to the base plate 2. A sleeve 014 is disposed outside of the outer rings (hereinafter, "first and second outer rings") 012b and 013b of the first and second ball bearings 012 and 013 respectively. One end of the inner ring 012a of the first ball bearing 012 (hereinafter "the first inner ring," and the inner ring of the second ball bearing, hereinafter referred to as "the second inner ring") is in contact with the flange 09b.

The sleeve 014 comprises a tubular sleeve body 014a and a flange 014b formed on one end of the sleeve body 014a. The sleeve 014 is disposed outside of the first and second ball bearings 012 and 013. In addition, the end surface of the flange 014b and the outer edge surface of the first outer ring 012b are aligned and the end surface of the sleeve body 014a and the outer edge surface of the second outer ring 013b are aligned.

The width dimensions of the first and second outer rings 012b and 013b are set to the same dimension A. The width dimensions of the first and second inner rings 012a and 013a are set to the same dimension B. The width of outer rings 012b and 013b is greater than the width of the inner rings 012a and 013a, i.e., A>B. The width dimension B of the first and second inner rings 012a and 013a is reduced by an equal distance (A-B)/2 from each end. The inner rings 012a and 013a are located in the center of the width dimension of outer rings 012b and 013b.

The "axial rattle" of a ball bearing is the sum of the previously set dimensions of the axial clearance of the ball bearing, and the axial elastic deformation of the outer ring and the inner ring produced by the application of a set preload. A one-sided rattle is formed by pushing one end of either the inner ring or the outer ring, and an opposite-side rattle is formed by pushing the other end. The total amount of the "axial rattle" of the ball bearing is the sum of the amounts of both these rattles. The distance (A-B)/2 is greater than the amount δ of the one-sided rattle of each of the first and second ball bearings 012 and 013. Such dimensional difference is capable of preventing the production of an axial one-sided rattle in the first and second ball bearings 012 and 013 when a preload is applied to one end of the first and second inner rings 12a and 013a, respectively. For example, in Figure 4, the above-mentioned dimensional difference is capable of preventing the production of an axial one-sided rattle of the second ball bearing 013 when a preload is applied in direction C to the outer end (outer tip) of the second inner ring 013a.

The first and second inner ring grooves 012d and 013d are formed at the center of the width of the first and second inner rings 012a and 013a. Therefore, measured from the centers of the first and second inner ring grooves 012d and 013d, the width dimensions of both the first and second inner rings 012a and 013a are B/2. The first and the second outer ring grooves 012e and 013e are formed at the center of the width of the first and second outer ring 12b and 13b. In its natural state each rolling element 12c and 13c are supported by inner ring grooves 12d and 13d and outer ring grooves 12e and 13e. A point contact is formed between the rolling elements and the inner ring grooves 12d and 13d and the outer ring grooves 12d and 13d. The point contact is located at the center of the inner ring grooves 12d and 13d and outer ring grooves 12e and 13e.

The first and second ball bearings 012 and 013 are installed on the shaft 09 so that the first and second outer rings 012b and 013b touch. Between the first and second inner rings 012a and 013a, in the state prior to applying a preload to the second inner ring 013a, a space S with a maximum length (A - B) is formed. In addition, the distance (span) P between the first and second rolling elements 012c and 013c respectively of the first and second ball bearings 012 and 013 respectively is equal to A.

In the bearing device 010, the first and the second outer rings 012b and 013b are attached to the inner face of the sleeve body 014a with an adhesive. The first inner ring 012a is installed on the shaft 09 and fixed with an adhesive, and the second inner ring 013a is installed on the shaft 09 with sliding capability. A preload in the direction of the arrow C in Figure 4 is applied to the outer end of the second inner ring 013a, and while such a preload is applied, the second inner ring 013a is fixed to the shaft 09 with an adhesive. Thus, eliminating the axial rattle and maintaining the desired precision and rigidity of the bearing device 010.

The size (A - B) of the above-mentioned space S is set so that it is greater than the amount 2δ - the sum of the axial one-sided rattle of the first ball bearing 012 and the axial one-sided rattle of the second ball bearing 013. Thus, the amount of preload applied to the second inner ring 013a can be adjusted over a wide range.

In a conventional bearing device the width dimension of the first and second outer rings and the width dimensions of the first and second inner rings are identical. The elimination of the rattling of the bearing device when a preload is applied to either the first or second inner rings is accomplished by providing a space S between the first and second inner rings. The space S is provided by means of an annular projection of sleeve inner surface between the first and the second outer ring or by a separate member, between the first and second outer rings. But, in the bearing device 010, there is no need to use such an annular projection of the sleeve 014 inner surface or an annular space created by a separate member, and to this extent, the width dimensions (axial orientation) of the overall body of the bearing device 010 can be reduced. Consequentially, the thickness dimensions of the swing arm 7 support can be reduced and the HDD 1 can be made thinner.

Moreover, in the bearing device 010, in the state prior to the application of a preload to the second inner ring 013a, the centers of the first and second outer ring grooves 012e and 013e, the centers of the first and second inner ring grooves 012d and 013d and the centers of the first and second rolling elements 012c and 013c respectively are in a single plane. Because the first and second ball bearings 012 and 013 have a symmetrical structure with respect to the above described plane, when the first and second ball bearings 012 and 013 are installed on the shaft 09 and the bearing device 010 assembled, there is no need for awareness and control of the arrangement orientation or assembly orientation of the first and second ball bearings 012 and 013, and the production efficiency is increased.

The bearing device 010, as described above, is very useful for card type ultra-thin hard disk drive devices for which, recently there has been a particularly strong demand. The applicant has applied for a patent concerning a bearing device of this type and was granted a patent (see Japanese Patent Publication 3054858).

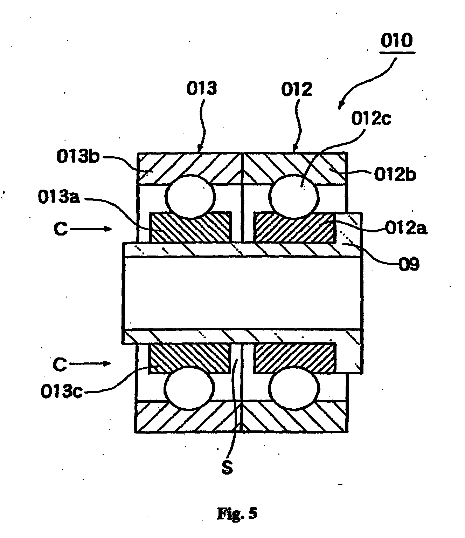

Figure 4 shows the bearing device 010 of the type that has the sleeve 014 installed. However, as shown in Figure 5, bearing device 010 can also be constructed without the sleeve 014. In the bearing device 010 of Figure 5, the first and the second outer rings 012b and 013b are maintained in contact with each other. The first inner ring 012a is installed on the shaft 09 and fixed with an adhesive, while the second inner ring 013a is installed on the shaft 09 with sliding capability. A preload in the direction of the arrows C in Figure 5 is then applied to the outer end of the second inner ring 013a, and while such a preload is applied, the second inner ring 013a is fixed to the shaft 09 with an adhesive, thus eliminating the axial rattle, and maintaining the desired precision and rigidity of the bearing device 010.

In the bearing device 010 constructed as shown in Figure 5, similar to the bearing device 010 shown in Figure 4, a space S is maintained between the first and second inner rings 012a and 013a. The annular protrusion of the sleeve 014 inner surface or a separate member to form annular space are not required. Thus, the width dimensions of the body of the bearing device 010 is reduced, and consequentially, the thickness dimensions of the swing arm 7 support can be reduced and the HDD 1 can be made thinner. Moreover, when the first and second ball bearings 012 and 013 are installed on the shaft 09 and the bearing device 010 assembled, there is no need for awareness and control of the assembly orientation or arrangement orientation of the first and second ball bearings 012 and 013, and the production efficiency can thus be increased.

Nevertheless, in the conventional bearing device 010, shown in Figure 4 and Figure 5, the width dimension for the bearing device as a whole is too large, and a reduction in size of bearing device 010 is desirable.

The present invention provides a bearing device free from the problems associated with conventional bearing devices, and at the same time provides a reduction in size and reduced thickness for the bearing without compromising production efficiency.

The bearing device includes two bearings assembled on a shaft. Each bearing includes an inner ring, an outer ring and rolling members such as balls. The outer rings of the bearings are in close contact with each other. A space is created between the two inner rings by virtue of a difference between the total width dimensions of the two outer rings and the total width dimensions of the two inner rings. This difference in dimension is greater than 2δ - the sum of axial one-sided rattle δ of each of the two bearings. Therefore, the amount of preload applied to the outer edge of either inner ring can be adjusted over a wide range and the rattling of the bearing device can be eliminated, and at the same time the desired precision and rigidity of the bearing device can be maintained.

The inner rings and the outer rings each have grooves. The grooves of the outer rings are each formed so as to face the groove of the inner rings, which are located in the center of the inner ring. Since the edges of the inner rings and the outer rings are aligned with each other on the ends of the bearings that are apart when the bearings are assembled, the distance (span) P between the rolling elements of the two bearings in the bearing device of present invention is same as the conventional bearing device. Since the dimension of the bearing device overall in the width orientation (axial orientation) is smaller, the thickness of the swing arm support can be reduced and it can be thinner than a swing arm that uses a conventional bearing device. Therefore, the bearing is suitable for use in PC card type ultra-thin hard disk drive devices, for which recently there has been a particularly strong demand.

Furthermore, it is easy to identify the side of the bearing with the outer ring edge and inner ring edge aligned so that when the two bearings are arranged and installed on the shaft, and the bearing device assembled, it is easy to select the orientation of the arrangement and the orientation for assembling each of the bearing. Thus, there is no loss of production efficiency.

Further features and advantages will appear more clearly on a reading of the detailed description, which is given below by way of example only and with reference to the accompanying drawings.
Figure 1 is a vertical cross sectional diagram of a bearing device according to an embodiment of the present invention.
Figure 2 is a plan view showing an outline of the overall structure of a hard disk drive (HDD).
Figure 3 is a cross sectional diagram of the hard disk drive (HDD) in Figure 2.
Figure 4 is a cross sectional diagram showing one example of a conventional bearing device.
Figure 5 is a cross sectional diagram showing another example of a conventional bearing device.

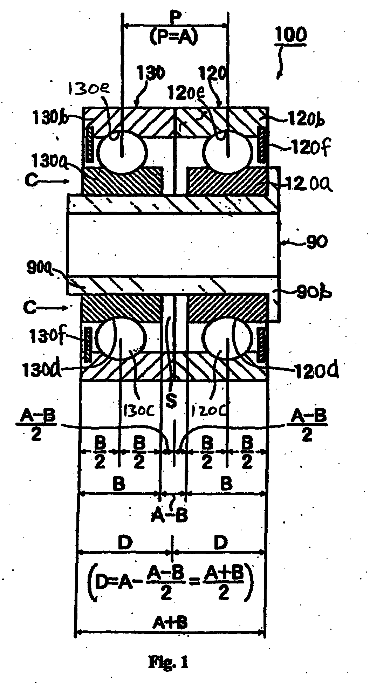

Figure 1 is a vertical cross sectional diagram of one embodiment of a bearing device 100 according to the present invention. As is shown in Figure 1 the bearing device 100 comprises a shaft 90, the first and second single row deep groove ball bearings (abbreviated to ball bearings for simplicity hereinafter) 120 and 130 disposed on the tubular main body of the aforementioned shaft 90. A first and a second shield 120f and 130f cover the outside edges of these first and second ball bearings 120 and 130 respectively. The first and second shields 120f and 130f prevent the leakage of the grease from the inside of the bearing device 100. One edge of the first inner ring 120a is in contact with a flange 90b of the shaft 90.

The width dimension for the first and second inner rings 120a and 130a is reduced, however, the first and second inner ring races 120d and 130d for the first and second inner rings 120a and 130a remain in the center of the inner rings 120a and 130a. The width of the inner rings120a and 130a is B. Therefore, the length measured from the center of inner rings races120d and 130d to the respective edges of the inner rings 120a and 130a is B/2.

Furthermore, the dimensions D for the widths of the first and second outer rings 120b and 130b are set using the aforementioned dimension B and dimension E, such that D ≤ (B + E). Preferably D = (B + E).

Dimension E is sufficiently large to allow the absorption of the one-sided rattle of the first and second ball bearings 120 and 130 when preload is applied to the outer edge of the inner rings 120a and 130a. Thus, the amount of rattle δ is such that E > δ. The dimension of the one-sided axial rattle δ is defined δ < (D - B) = E.

The dimension D for the width of the first and second outer rings 120b and 130b need not be any longer, and the smaller it is, the greater the reduction in the size of the bearing device 100. However, it is necessary to pay attention to the assembly orientation for each ball bearing and the orientation of the arrangement.

A first and a second outer race 120e and 130e are formed such that the center points of the first and second outer races 120e and 130e are set at a distance B/2, from the outer edges of the first and second outer rings 120b, 130b.

Therefore, the shortening of the length of the first and second ball bearings 120 and 130 is such that it makes it possible to absorb the rattle δ with the application of the preload to each of the outer edges of the first and second inner rings 120a and 130a.

To assemble the bearing device 100, the first and second ball bearings 120 and 130 are installed on the shaft 90 so that the first and second outer rings 120b and 130b are tightly together, and a space S with a length of 2 (D - B) is formed between the first and second inner rings 120a and 130a. Here, 2 (D - B) = 2E > 2δ.

The length of this space S is the same as the length of the space S in conventional bearing devices (see Figure 4), having the relationship of 2 (D - B) = (A - B). Therefore, A = (2D - B), and this is the distance (span) P between the first and second rolling elements 120c and 130c. Even in conventional bearing devices, the span P between the first and second rolling elements is equal to A. Thus, the span P between the first and second rolling elements 120c and 130c in the present embodiment and the span P between the first and second rolling elements in a conventional bearing device are equal, both being A.

During assembly, the first and second outer rings 120b and 130b are maintained in a state of contact, and the first inner ring 120a is installed on the shaft 90 and affixed with an adhesive. The second inner ring 130a is installed on the shaft 90 so it can slide. Subsequently, a preload is applied to the outer edge of the second inner ring 130a in the direction of the arrow C in Figure 1, and with this preload applied, the second inner ring 130a is affixed to the shaft 90 using an adhesive. Thus, the rattle in the axial orientation from one side of the second ball bearing 130 and the rattle in the axial orientation from one side of the first ball bearing 120 are brought together and the rattle in the axial orientation of the bearing device as a whole is removed and the prescribed precision and rigidity of the bearing device 100 is maintained. However, the application of a preload to the inside edge of the second inner ring 130a cannot normally be done.

Since the size of space S is set to be larger than 2δ (the amount of rattle for the bearing device 100 as a whole in the axial orientation), it is possible to adjust the preload in a wide range when applying a preload to the second inner ring 130a.

The bearing device 100 is finally completed by attaching the first and second shields 120f and 130f to the bearing device 100. The dimension 2D in the orientation of the width (axial orientation) of the bearing device 100 assembled as described above is 2D = (A + B) < 2A. Therefore, when this bearing device 100 is used in a hard disk drive HDD 1 (Figure 2), the thickness of the swing arm 7 support, for example, can be made smaller, and the HDD 1 can be made thinner. A thinner HDD is desirable for PC card type ultra thin hard disk drive applications.

Furthermore, it is easy to determine if the side of the bearing has the outer ring edge and inner ring edge aligned or not aligned. So when the two rolling bearings 120 and 130 are installed on the shaft 90 and the bearing device assembled, it is easy to select the orientation of the arrangement and the orientation for assembling each of the rolling bearings. Thus, there is no loss of production efficiency.

Furthermore, since the body 90a of the shaft 90 is tubular, it can be screwed into and affixed to the base plate 2 (Figure 2) via a bolt attached to the tubular body 90a of the shaft 90, thereby providing a simple method for attachment of the bearing device to a base plate of a HDD.

In another embodiment, a sleeve may be disposed outside of the first and second outer rings 120b and 130b.

While a preferred embodiment of the invention has been described, various modifications will be apparent to one skilled in the art in light of this disclosure and are intended to fall within the scope of the appended claims.

## Claims

1. A bearing device comprising:
a shaft;
a first bearing mounted on the shaft;
a second bearing mounted on the shaft; the first bearing and the second bearing each comprising:
an outer ring; and
an inner ring, wherein only one edge of the outer ring and the inner ring are aligned.

2. The bearing device of claim 1, wherein for each bearing the outer ring is wider than the inner ring by a length greater than a one sided rattle of the bearing.

3. The bearing device of any preceding claim, wherein the first and the second bearings are mounted on the shaft such that the outer rings of the first and the second bearing touch and a space is formed between the inner rings of the first and the second bearings.

4. The bearing device of claim 3, wherein the space formed between the inner rings of the first and the second bearings is larger than the sum of one sided rattle for the first and the second bearing.

5. The bearing device of claim 2, further comprising:
a first race formed on the outer ring;
a second race formed on the inner ring; and
rolling elements placed between the first race and the second race.

6. The bearing device of claim 5, wherein the first race is formed closer to one edge of the outer ring.

7. The bearing device of claim 5 or 6, wherein the rolling elements are balls.

8. The bearing device of claim 5 or 6, wherein the rolling elements are rollers.

9. The bearing device of any preceding claim, further comprising a shield mounted in each of the first bearing and the second bearing.
